# EUROPÄISCHE PATENTSCHRIFT

(11) **EP 3 899 576 B1**
(45) Veröffentlichungstag und Bekanntmachung des Hinweises auf die Patenterteilung: **13.08.2025**
(21) Anmeldenummer: 19813502.2
(22) Anmeldetag: 02.12.2019
(51) Int. Cl.: G01S 7/484, G01S 7/497, G01S 17/10, G01S 17/42, G01S 17/931

(54) **OPTISCHE DETEKTIONSVORRICHTUNG ZUR ERFASSUNG VON OBJEKTEN UND VERFAHREN ZUM BETREIBEN EINER DETEKTIONSVORRICHTUNG**
OPTICAL DETECTION DEVICE FOR DETECTING OBJECTS, AND METHOD FOR OPERATING A DETECTION DEVICE
ARRANGEMENT DE DÉTECTION OPTIQUE POUR DÉTECTER DES OBJETS ET PROCÉDÉ POUR FAIRE FONCTIONNER UN ARRANGEMENT DE DÉTECTION

(30) Priorität: 20.12.2018 DE 102018133193
(43) Veröffentlichungstag der Anmeldung: 27.10.2021
(73) Patentinhaber: Valeo Schalter und Sensoren GmbH, 74321 Bietigheim-Bissingen (DE)
(72) Erfinder: PARL, Christoph, 74321 Bietigheim-Bissingen (DE); STRICKER-SHAVER, Daniel, 74321 Bietigheim-Bissingen (DE); NIES, Juergen, 74321 Bietigheim-Bissingen (DE); MUELLER, Felix, 74321 Bietigheim-Bissingen (DE)
(74) Vertreter: Pothmann, Karsten
(86) Internationale Anmeldenummer: PCT/EP2019/083270
(87) Internationale Veröffentlichungsnummer: WO 2020/126432

(56) Entgegenhaltungen:
- WO-A1-2018/066612
- WO-A1-2018/066612
- WO-A1-2019/224180
- WO-A1-2019/224180
- WO-A2-2017/200896
- WO-A2-2017/200896

## Beschreibung

### Technisches Gebiet

Die Erfindung betrifft eine optische Detektionsvorrichtung zur Erfassung von Objekten,
- mit wenigstens einer Sendeeinrichtung zur Aussendung von Lichtpulsen,
- mit wenigstens einem Empfänger, mit dem die Lichtpulse empfangen werden können,
- und mit wenigstens einer Steuer- und Auswerteeinrichtung zur Steuerung der wenigstens einen Sendeeinrichtung und des wenigstens einen Empfängers und zur Auswertung von mit der wenigstens einen Empfangseinrichtung empfangenen Lichtpulsen.

Außerdem betrifft die Erfindung ein Verfahren zum Betreiben einer Detektionsvorrichtung, die zur Erfassung von Objekten vorgesehen ist, wobei bei dem Verfahren Lichtpulse mit einer Sendeeinrichtung ausgesendet werden, die Lichtpulse direkt oder indirekt mit wenigstens einem Empfänger empfangen werden und die empfangenen Lichtpulse mit wenigstens einer Steuer- und Auswerteeinrichtung ausgewertet werden.

### Stand der Technik

Vom Markt her ist eine optische Detektionsvorrichtung zur Erfassung von Objekten bekannt, mit wenigstens einer Sendeeinrichtung zur Aussendung von Lichtpulsen, mit wenigstens einem Empfänger, mit dem die Lichtpulse als Empfangssignale empfangen werden können, und mit wenigstens einer Steuer- und Auswerteeinrichtung zur Steuerung der wenigstens einen Sendeeinrichtung und des wenigstens einen Empfängers und zur Auswertung von mit dem wenigstens einen Empfänger empfangenen Lichtpulsen.

Aus der WO 2017/200896 A2 ist eine optische Detektionseinrichtung gemäß dem Oberbegriff des Anspruchs 1 bekannt. Die Detektionseinrichtung umfasst eine Sendeeinrichtung mit einer Laserdiode, um Laserstrahlen in einen Erfassungsbereich in der Umgebung auszusenden, sowie einen Laserdetektor, um an Objekten in der Umgebung reflektierte Laserstrahlen zu empfangen. Ferner umfasst die Detektionseinrichtung eine Funktionsprüfungseinrichtung mit einem Kontrollschaltkreis, um ein Fehlersignal auszugeben.

Der Erfindung liegt die Aufgabe zugrunde, eine Detektionsvorrichtung und ein Verfahren der eingangs genannten Art zu gestalten, bei denen die Effizienz und/oder Funktionssicherheit der Detektionsvorrichtung verbessert werden kann.

### Offenbarung der Erfindung

Diese Aufgabe wird von einer Detektionsvorrichtung gemäß Anspruch 1 gelöst.

Diese weist erfindungsgemäß auf:
- ein lichtemittierendes erstes Halbleiterelement, welches bezüglich einer elektrischen Spannung eine Sperrrichtung und eine Durchlassrichtung aufweist, wobei das erste Halbleiterelement bei Anlegen einer elektrischen Spannung in seiner Durchlassrichtung Licht aussendet,
- und wenigstens ein lichtemittierendes zweites Halbleiterelement, welches bezüglich einer elektrischen Spannung eine Sperrrichtung und eine Durchlassrichtung aufweist, wobei das zweite Halbleiterelement bei Anlegen einer elektrischen Spannung in seiner Durchlassrichtung Licht aussendet,
- wobei das erste Halbleiterelement und das wenigstens eine zweite Halbleiterelement bezüglich der elektrischen Spannung parallel und bezüglich ihrer Sperrrichtungen entgegengesetzt geschaltet sind,
- und wobei wenigstens ein zweites Halbleiterelement Teil einer Funktionsprüfungseinrichtung der Detektionsvorrichtung ist.

Erfindungsgemäß wird mit dem wenigstens einen zweiten Halbleiterelement eine Induktionsspannung, welche bei einem Lichtpuls des ersten Halbleiterelements entsteht, zusätzlich zur Aussendung eines entsprechenden weiteren Lichtpulses genutzt. Auf diese Weise kann die Induktionsspannung abgebaut werden, um das erste Halbleiterelement zu schützen. Zusätzlich kann der Lichtpuls, welcher aus der Induktionsspannung mit dem wenigstens einen zweiten Halbleiterelement erzeugt wird, entweder zu einer weiteren Messung oder zur Überprüfung der Funktionsfähigkeit der der Detektionsvorrichtung eingesetzt werden. So kann der Funktionsumfang der Detektionsvorrichtung erweitert werden und/oder die Funktionssicherheit der Detektionsvorrichtung verbessert werden.

Erfindungsgemäß ist wenigstens ein zweites Halbleiterelement Teil einer Funktionsprüfungseinrichtung für die optische Detektionsvorrichtung. Das mit diesem wenigstens einen Halbleiterelement ausgesendete Licht kann verwendet werden, um die Funktionsfähigkeit der Detektionsvorrichtung zu überprüfen. Insbesondere kann mit dem Licht eine Lichttransmission in einem Gehäuse oder durch Fenster der Detektionsvorrichtung überwacht werden. Zusätzlich oder alternativ kann die Reflexionsfähigkeit von spiegelnden Flächen der Detektionsvorrichtung überwacht werden. Bei Verschmutzungen oder Wassereintritt kann die Lichttransmission und/oder die Reflexion verschlechtert werden. Dies kann durch Vergleich der Ergebnisse einer Funktionsprüfungsmessung mit den Ergebnissen entsprechenden Referenzmessungen erkannt werden.

Die Induktionsspannung entsteht im Moment des Abschaltens des ersten Halbleiterelements nach einem Lichtpuls aufgrund von Induktivität von Bauteilen, insbesondere elektrischen Leitungen, Verbindungen, Bonddrähten oder dergleichen, welche in der Sendeeinrichtung enthalten sind. Mittels des antiparallel geschalteten wenigstens einen zweiten Halbleiterelements wird das erste Halbleiterelement kurzgeschlossen, um dieses vor den entsprechenden Induktionsspannungen zu schützen. Bei entsprechend kurzen und leistungsstarken Lichtpulsen und entsprechenden elektrischen Strömen könnte ansonsten das erste Halbleiterelement durch derartige Induktionsspannungen zerstört werden.

Vorteilhafterweise können Mittel der Funktionsprüfungseinrichtung mithilfe wenigstens einer Steuer- und/oder Auswerteeinrichtungen realisiert sein. Auf diese Weise kann ein technischer Aufwand zur Prüfung der Funktionsfähigkeit wenigstens von Teilen der Detektionsvorrichtung verringert werden.

Vorteilhafterweise können mit dem ersten Halbleiterelement und wenigstens einem zweiten Halbleiterelement in der Intensität modulierte Lichtpulse erzeugt werden.

Vorteilhafterweise kann die emittierte Lichtmenge, ein Pulslänge und/oder eine Frequenz der Lichtpulse des ersten Halbleiterelements und/oder wenigstens eines zweiten Halbleiterelements an die Verwendung der Detektionsvorrichtung angepasst werden. Hierzu können entsprechende Bauteile, insbesondere elektronische Komponenten, verwendet werden. Mit dem wenigstens einen zweiten Halbleiterelement kann die dort anfallende Leistung mit einem hohen Wirkungsgrad, insbesondere etwa 90 %, in nutzbare Lichtenergie umgewandelt werden. Mithilfe der antiparallel geschalteten Halbleiterelemente kann so eine Verlustleistung stark reduziert werden.

Mit dem wenigstens einen zweiten Halbleiterelement kann die Wärmeleistung der Detektionsvorrichtung von dem ersten Halbleiterelement abgeleitet werden. Auf diese Weise kann die Detektionsvorrichtung insgesamt kompakter aufgebaut werden.

Vorteilhafterweise können das erste Halbleiterelement und das wenigstens eine zweite Halbleiterelement verhältnismäßig nah beieinander angeordnet sein. Auf diese Weise kann besserer zeitlicher Zusammenhang zwischen den Lichtpulsen des ersten Halbleiterelements und Lichtpulsen des zweiten Halbleiterelements realisiert werden. Außerdem kann so ein effizienter Betrieb der Halbleiterelemente ermöglicht werden. So kann außerdem ein besserer Wärmeaustausch zwischen den Halbleiterelementen erfolgen.

Vorteilhafterweise können das erste Halbleiterelement und das wenigstens eine zweite Halbleiterelement auf einem gemeinsamen Halbleitersubstrat realisiert sein. Auf diese Weise können das erste Halbleiterelement und das wenigstens eine zweite Halbleiterelement näher beieinander angeordnet werden.

Bei einer vorteilhaften Ausführungsform kann die Funktionsprüfungseinrichtung Mittel aufweisen, mit welchen eine Lichtmenge und/oder ein zeitlicher Verlauf von Lichtpulsen, die mit dem wenigstens einen zweiten Halbleiterelement emittiert werden, ermittelt werden kann und daraus eine Sendeleistung des ersten Halbleiterelements ermittelt werden. Auf diese Weise kann mit den Lichtpulsen des wenigstens einen zweiten Halbleiterelements insbesondere verlustfrei eine Sendeleistung des ersten Halbleiterelements bestimmt werden.

Vorteilhafterweise kann die von dem wenigstens einen zweiten Halbleiterelement emittierte Lichtmenge proportional zu der Lichtmenge sein, welche mit dem ersten Halbleiterelement emittiert wird. Zusätzlich oder alternativ kann die von dem wenigstens einen zweiten Halbleiterelement emittierte Lichtmenge zeitlich abhängig von der Lichtmenge sein, welche mit dem ersten Halbleiterelement emittiert wird. Auf diese Weise kann über die Lichtmenge des wenigstens zweiten Halbleiterelements die Lichtmenge des ersten Halbleiterelements bestimmt werden.

Bei einer weiteren vorteilhaften Ausführungsform kann die Funktionsprüfungseinrichtung Mittel aufweisen, mit welchen die Funktionsfähigkeit wenigstens einer Licht-Umlenkeinrichtung der Detektionsvorrichtung überprüft werden kann, wobei mit der Licht-Umlenkeinrichtung Lichtpulse, die mit dem ersten Halbleiterelement ausgesendet werden, in einen Überwachungsbereich umgelenkt werden können und/oder reflektierte Lichtpulse aus dem Überwachungsbereich auf wenigstens einen Empfänger umgelenkt werden können, wobei wenigstens ein zweites Halbleiterelement so auf die Licht-Umlenkeinrichtung gerichtet sein kann, dass mit dem wenigstens einen zweiten Halbleiterelement ausgesendeten Lichtpulse auf wenigstens einen Empfänger umgelenkt werden können und aus den reflektierten Lichtpulsen, die mit dem wenigstens einen Empfänger empfangen werden können, auf die Funktionsfähigkeit der Licht-Umlenkeinrichtung geschlossen werden kann. Auf diese Weise können Fehlfunktionen im Zusammenhang mit der Licht-Umlenkeinrichtung effizient und schnell erfasst werden. So können schneller Gegenmaßnahmen ergriffen werden. Insbesondere kann bei erkennen einer Fehlfunktion die Sendeleistung des ersten Halbleiterelements und/oder des wenigstens einen zweiten Halbleiterelements reduziert werden. Ferner kann bei einer Fehlfunktion im Zusammenhang mit der Licht-Umlenkeinrichtung die Detektorvorrichtung sicher abgeschaltet werden.

Vorteilhafterweise kann die wenigstens eine Licht-Umlenkeinrichtung in einer ersten optischen Achse mit wenigstens einer zweiten Halbleiterdiode mit Lichtpulsen angestrahlt werden. Die reflektierten Lichtpulse können mit wenigstens einem Empfänger, welcher passend zu der wenigstens einen zweiten Halbleiterdiode bezüglich der ersten optischen Achse angeordnet ist, empfangen und zur Überprüfung der Funktionsfähigkeit der wenigstens einen Licht-Umlenkeinrichtung verwendet werden. In einer zweiten optischen Achse, welche sich von der ersten optischen Achse unterscheidet, kann die wenigstens eine Licht-Umlenkeinrichtung mit der ersten Halbleiterdiode mit Lichtpulsen angestrahlt werden, sodass diese in den Überwachungsbereich umgelenkt werden. An etwaigen Objekten im Überwachungsbereich reflektierte Lichtpulse können in der zweiten optischen Achse mit der wenigstens einen Licht-Umlenkeinrichtung zu wenigstens einem Empfänger umgelenkt werden.

Vorteilhafterweise kann wenigstens ein Empfänger so innerhalb des Gehäuses der Detektionsvorrichtung angeordnet sein, dass er bei Einstellungen der Licht-Umlenkeinrichtung, in der die maximale Lichtablenkung erreicht wird, mit den reflektierten Lichtpulsen wenigstens eines zweiten Halbleiterelements angestrahlt wird.

Bei einer weiteren vorteilhaften Ausführungsform kann die Funktionsprüfungseinrichtung Mittel aufweisen, mit welchen eine Temperatur des ersten Halbleiterelements und/oder eine Wellenlänge der Lichtpulse, die mit dem ersten Halbleiterelement ausgesendet werden können, aus Lichtpulsen, die mit wenigstens einem zweiten Halbleiterelement ausgesendet werden können und mit wenigstens einem Empfänger empfangen werden können, ermittelt werden kann. Auf diese Weise kann die Temperatur und/oder die Wellenlänge verlustfrei und/oder kontaktlos insbesondere fortwährend überwacht werden.

Vorteilhafterweise können das erste Halbleiterelement und das wenigstens eine zweite Halbleiterelement mittels Medium, insbesondere gasförmigen oder festem Medium, wärmeübertragend miteinander verbunden sein, insbesondere entsprechend nah bei einander angeordnet sein. Auf diese Weise entspricht die Temperatur des wenigstens einen zweiten Halbleiterelements etwa der Temperatur des ersten Halbleiterelements.

Bei einer weiteren vorteilhaften Ausführungsform kann die Funktionsprüfungseinrichtung wenigstens einen optischen Bandpass, insbesondere mit geringer Güte, umfassen, welcher wenigstens einem Empfänger zugeordnet ist. Die Wellenlänge der emittierten Lichtpulse verändert sich mit der Temperatur des wenigstens einen zweiten Halbleiterelements. Mithilfe des wenigstens einen optischen Bandpasses kann die Änderung der Signalamplitude der empfangenen Laserpulse in dem entsprechenden Wellenlängenbereich ermittelt und daraus die Temperatur des wenigstens einen zweiten Halbleiterelements ermittelt werden. Aus der Temperatur des wenigstens einen zweiten Halbleiterelements kann auf die Temperatur des ersten Halbleiterelements geschlossen werden. So kann insgesamt die Temperatur des ersten Halbleiterelements aus den Lichtpulsen, welche mit dem wenigstens einen zweiten Halbleiterelement gesendet werden, ermittelt werden.

Bei einer weiteren vorteilhaften Ausführungsform kann die Funktionsprüfungseinrichtung Mittel aufweisen, mit denen ein Verschmutzungsgrad im optischen Weg der Detektionsvorrichtung überprüft werden kann. Auf diese Weise kann erkannt werden, falls es zu Störungen der Lichtausbreitung aufgrund von Verschmutzungen kommt. Derartige Verschmutzungen können starke Auswirkungen auf Messungen mit der Detektionsvorrichtung haben. Sobald Verschmutzungen erkannt werden, können Systemparameter der Detektionsvorrichtung entsprechend angepasst werden. Alternativ oder zusätzlich können Reinigungsmaßnahmen eingeleitet werden.

Vorteilhafterweise kann der Verschmutzungsgrad im optischen Weg der Detektionsvorrichtung mithilfe von Reflexionsmessungen mit wenigstens einem zweiten Halbleiterelement und wenigstens einem Empfänger ermittelt werden.

Bei einer weiteren vorteilhaften Ausführungsform kann die Funktionsprüfungseinrichtung Mittel aufweisen, mit denen eine Demodulationsfrequenz und/oder Lock-In-Frequenz des ersten Halbleiterelements auf Basis der Frequenz von Lichtpulsen, die mit wenigstens einem zweiten Halbleiterelement ausgesendet und mit wenigstens einem Empfänger empfangen werden können, überprüft werden kann. Auf diese Weise kann die Demodulationsfrequenz und/oder die Lock-In-Frequenz des ersten Halbleiterelements in einer modulierten Detektionsvorrichtung, insbesondere einem LiDAR-System, mithilfe des wenigstens einen zweiten Halbleiterelements überprüft werden, da die Lichtemission des wenigstens einen zweiten Halbleiterelements zeitlich von der Lichtemission des ersten Halbleiterelements abhängt.

Vorteilhafterweise können das erste Halbleiterelement und das wenigstens eine zweite Halbleiterelement Licht mit sich wenigstens teilweise überlappenden Wellenlängenbereichen oder Licht mit sich nicht überlappenden Wellenlängenbereichen aussenden. Falls sich die Wellenlängenbereiche des ersten Halbleiterelements und des wenigstens einen zweiten Halbleiterelements teilweise überlappen, können das Licht des ersten Halbleiterelements und des wenigstens einen zweiten Halbleiterelements für entsprechende Messungen, insbesondere mit gleichen oder ähnlichen Empfängern, verwendet werden.

Vorteilhafterweise können das erste Halbleiterelement und das wenigstens eine zweite Halbleiterelement Licht mit der gleichen Wellenlänge oder im gleichen Wellenlängenbereich aussenden. Auf diese Weise können die Halbleiterelemente sich ergänzen.

Falls sich die Wellenlängenbereiche des ersten Halbleiterelements und des wenigstens einen zweiten Halbleiterelements nicht überlappen, können die Halbleiterelemente mit einem geringeren Aufwand optisch entkoppelt werden.

Vorteilhafterweise kann wenigstens ein Halbleiterelement Licht in einem für das menschliche Auge nicht sichtbaren Bereich aussenden. Auf diese Weise kann die Detektionsvorrichtung in technischen Bereichen eingesetzt werden, in denen menschliche Augen nicht durch die entsprechende Lichtaussendung irritiert werden sollen. Die Detektionsvorrichtung kann so bei Fahrzeugen insbesondere im Straßenverkehr eingesetzt werden.

Vorteilhafterweise kann wenigstens ein Halbleiterelement Licht im Infrarotbereich aussenden. Licht im Infrarotbereich eignet sich insbesondere zur Detektion von Objekten. Ferner ist Licht im Infrarotbereich für das menschliche Auge nicht sichtbar.

Vorteilhafterweise können das erste Halbleiterelement und wenigstens ein zweites Halbleiterelement bezüglich der Aussendung der Lichtpulse in dieselbe Raumrichtung gerichtet sein und/oder das erste Halbleiterelement und wenigstens ein zweites Halbleiterelement können in unterschiedliche Raumrichtungen gerichtet sein.

Sofern die Halbleiterelemente in dieselbe Raumrichtung gerichtet sind, können ihre jeweiligen Lichtpulse in denselben Raumbereich, insbesondere Überwachungsbereich, gesendet werden.

Alternativ können die Halbleiterelemente in unterschiedliche Raumrichtungen gerichtet sein. Mit einem der Halbleiterelemente kann ein Raumbereich in der Umgebung angestrahlt werden. Wenigstens ein anderes Halbleiterelement kann zur Überprüfung der Funktionsfähigkeit der Sendeeinrichtung, insbesondere der optischen Detektionsvorrichtung, herangezogen werden. Das wenigstens eine andere Halbleiterelement kann hierzu in das Innere des Gehäuses der Detektionsvorrichtung gerichtet sein.

Vorteilhafterweise können die Ansprechgeschwindigkeiten des ersten Halbleiterelements und des wenigstens einen zweiten Halbleiterelements etwa gleich groß, bevorzugt identisch, sein. Auf diese Weise können die Induktionsspannungen besser kompensiert werden.

Vorteilhafterweise können das erste Halbleiterelement und das wenigstens eine zweite Halbleiterelement von gleicher Bauart sein oder das erste Halbleiterelement und das wenigstens eine zweite Halbleiterelement können von unterschiedlicher Bauart sein.

Sofern die Halbleiterelemente von gleicher Bauart sind, kann die Kompensation der Induktionsspannungen verbessert werden. Insbesondere können so gleich große Ansprechgeschwindigkeiten realisiert werden.

Alternativ können die Halbleiterelemente von unterschiedlicher Bauart sein. Auf diese Weise können insbesondere unterschiedliche Wellenlängenbereiche realisiert werden.

Vorteilhafterweise kann wenigstens ein Halbleiterelement eine Laserdiode sein und/oder wenigstens ein Halbleiterelement kann eine Leuchtdiode sein.

Vorteilhafterweise kann das wenigstens eine Halbleiterelement, mit welchem Licht zur Überwachung eines Raumbereichs ausgesendet wird, eine Laserdiode sein. Mit Laserdioden können Lichtpulse in Bezug auf Richtung, Pulslänge und Wellenlänge besser kontrolliert werden. Außerdem können bei Laufzeitmessungen mit Laserdioden sehr genaue Ergebnisse erzielt werden.

Vorteilweise kann wenigstens ein Halbleiterelement eine Leuchtdiode sein. Leuchtdioden können einfacher und preiswerter realisiert werden.

Vorteilhafterweise kann wenigstens ein Halbleiterelement eine Laserdiode sein und wenigstens ein Halbleiterelement kann eine Leuchtdiode sein. Alternativ können alle Halbleiterelemente der Sendeeinrichtung Laserdioden sein oder alle Halbleiterelemente der Sendeeinrichtung können Leuchtdioden sein. Auf diese Weise können alle bei der Sendeeinrichtung verwendeten Halbleiterelemente die gleiche Bauart aufweisen.

Vorteilhafterweise können das erste Halbleiterelement und das wenigstens eine zweite Halbleiterelement in einem gemeinsamen Gehäuse und/oder als gemeinsames Bauteil realisierte sein oder das erste Halbleiterelement und das wenigstens eine zweite Halbleiterelement können separat realisiert sein. In einem gemeinsamen Gehäuse können die Halbleiterelemente einfach eingebaut und zur Umgebung hin geschützt und abgeschirmt werden. Als gemeinsames Bauteil können die Halbleiterelemente besonders platzsparend realisiert werden. Vorteilhafterweise können die Halbleiterelemente in einem gemeinsamen Chip oder auf einem gemeinsamen Substrat realisiert sein. Die Halbleiterelemente können auch separat, insbesondere in getrennten Gehäusen und/oder als getrennte Bauteile, realisiert sein.

Vorteilhafterweise können mit der optischen Detektionsvorrichtung Objektinformationen von detektierten Objekten, insbesondere Entfernungen, Richtungen und/oder Geschwindigkeiten der Objekte relativ zu der Detektionsvorrichtung, ermittelt werden. Zusätzlich oder alternativ kann mit der Detektionsvorrichtung ein detektiertes Objekt identifiziert und/oder einer Gestenerkennung durchgeführt werden.

Vorteilhafterweise kann die wenigstens eine Detektionsvorrichtung nach einem Lichtlaufzeitverfahren arbeiten. Nach dem Lichtimpulslaufzeitverfahren arbeitende optische Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden. Dabei wird eine Laufzeit vom Aussenden eines Lichtpulses, mit wenigstens einem Sender, insbesondere einem lichtemittierenden Halbleiterelement, und dem Empfang des entsprechenden reflektierten Lichtpulses mit wenigstens einem Empfänger gemessen und daraus eine Entfernung zwischen der Detektionsvorrichtung und dem erfassten Objekt ermittelt.

Vorteilhafterweise kann die wenigstens eine Detektionsvorrichtung ein scannendes System sein. Dabei kann mit Lichtpulsen ein Überwachungsbereich abgetastet, also abgescannt, werden. Dazu können die entsprechenden Lichtpulse bezüglich ihrer Ausbreitungsrichtung über den Überwachungsbereich sozusagen geschwenkt werden. Hierbei kann wenigstens eine Licht-Umlenkeinrichtung, insbesondere eine Umlenkspiegeleinrichtung, zum Einsatz kommen.

Vorteilhafterweise kann die Detektionsvorrichtung ein laserbasiertes Entfernungsmesssystem sein. Das laserbasierte Entfernungsmesssystem kann als Lichtquelle der Sendeeinrichtung wenigstens eine Laserdiode aufweisen. Mit der wenigstens einen Laserdiode können insbesondere gepulste Sendestrahlen als Sendesignale gesendet werden. Mit der Laserdiode können Sendesignale in für das menschliche Auge sichtbaren oder nicht sichtbaren Frequenzbereichen emittiert werden. Entsprechend kann wenigstens ein Empfänger einen für die Frequenz des ausgesendeten Lichtes ausgelegten Detektor, insbesondere eine Fotodiode, aufweisen. Das laserbasierte Entfernungsmesssystem kann vorteilhafterweise ein Laserscanner sein. Mit einem Laserscanner kann ein Überwachungsbereich mit insbesondere gepulsten Laserstrahlen abgetastet werden.

Vorteilhafterweise kann wenigstens ein lichtemittierendes Halbleiterelement wenigstens einen Oberflächenemitter aufweisen. Ein Oberflächenemitter, im englischen auch als vertical-cavity surface-emitting laser (VCSEL) bezeichnet, ist ein Halbleiterlaser, bei dem das Licht senkrecht zur Ebene des Halbleiterchips abgestrahlt wird.

Die Erfindung kann bei einem Fahrzeug, insbesondere einem Kraftfahrzeug, verwendet werden. Vorteilhafterweise kann die Erfindung bei einem Landfahrzeug, insbesondere einem Personenkraftwagen, Lastkraftwagen, einem Bus, einem Motorrad oder dergleichen, einem Luftfahrzeug und/oder einem Wasserfahrzeug verwendet werden. Die Erfindung kann auch bei Fahrzeugen eingesetzt werden, autonomen oder wenigstens teilweise autonom betrieben werden können. Ferner kann die auch bei einer stationären Detektionsvorrichtung, insbesondere zur Verkehrssteuerung oder -überwachung, eingesetzt werden.

Die Detektionsvorrichtung kann vorteilhafterweise mit wenigstens einer elektronischen Steuervorrichtung des Fahrzeugs, insbesondere einem Fahrerassistenzsystem und/oder einer Fahrwerksregelung und/oder einer Fahrer-Informationseinrichtung und/oder einem Parkassistenzsystem oder dergleichen, verbunden oder Teil einer solchen sein. Auf diese Weise können die mit der Detektionsvorrichtung erfassten Objektdaten, insbesondere die Entfernung, Orientierung und/oder Relativgeschwindigkeit eines Objekts relativ zum Fahrzeug, an die Steuervorrichtung übermittelt und zur Beeinflussung von Fahrfunktionen, insbesondere der Geschwindigkeit, einer Bremsfunktion, einer Lenkungsfunktion, einer Fahrwerksregelung und/oder einer Ausgabe eines Hinweis- und/oder Warnsignals insbesondere für den Fahrer oder dergleichen, verwendet werden. Die Detektionsvorrichtung kann auch in Verbindung mit einer Erkennungseinrichtung für Bewegungsmuster, insbesondere eine Gestenerkennung, verwendet werden. Auf diese Weise können Funktionen des Fahrzeugs, insbesondere die Öffnung von Türen, einer Heckklappe, einem Kofferraumdeckel, einer Motorhaube oder dergleichen auf Basis von Ergebnissen der Detektionsvorrichtung aktiviert werden.

Bei einer weiteren vorteilhaften Ausführungsform kann die Funktionsprüfungseinrichtung Mittel aufweisen, mit denen eine Umlenkstellung einer Licht-Umlenkeinrichtung ermittelt werden kann.

Ferner wird die Aufgabe erfindungsgemäß durch das Verfahren gemäß Anspruch 9 gelöst.

Dieses Verfahren umfasst, dass ein elektrischer Sendespannungspuls in Durchlassrichtung an einem lichtemittierenden ersten Halbleiterelement angelegt und mit dem ersten Halbleiterelement ein entsprechender Lichtpuls ausgesendet wird, im Abschaltmoment des ersten Halbleiterelements mit elektrischen Induktivitäten der Sendeeinrichtung wenigstens ein Induktionsspannungspuls erzeugt wird, welcher dem Sendespannungspuls entgegen gerichtet ist, und der Induktionsspannungspuls an wenigstens einem lichtemittierenden zweiten Halbleiterelement angelegt wird, welches zu dem ersten Halbleiterelement antiparallel geschaltet ist, sodass mit dem wenigstens einen zweiten Halbleiterelement infolge des Induktionsspannungspulses ein Lichtpuls emittiert wird und mit wenigstens einem Empfänger direkt oder indirekt empfangen wird und aus dem empfangenen Lichtpuls auf die Funktionsfähigkeit wenigstens von Teilen der Detektionsvorrichtung geschlossen wird.

Bei einer vorteilhaften Ausgestaltung des Verfahrens kann eine Lichtmenge und/oder ein zeitlicher Verlauf des Lichts von Lichtpulsen, die mit dem wenigstens einen zweiten Halbleiterelement emittiert werden, ermittelt werden und daraus eine Sendeleistung des ersten Halbleiterelements ermittelt werden. Auf diese Weise kann mit den Lichtpulsen des wenigstens einen zweiten Halbleiterelements insbesondere verlustfrei eine Sendeleistung des ersten Halbleiterelements bestimmt werden.

Bei einer weiteren vorteilhaften Ausgestaltung des Verfahrens kann die Funktionsfähigkeit wenigstens einer Licht-Umlenkeinrichtung der Detektionsvorrichtung überprüft werden, indem wenigstens ein zweites Halbleiterelement so auf die Licht-Umlenkeinrichtung gerichtet wird, dass mit dem wenigstens einen zweiten Halbleiterelement ausgesendete Lichtpulse auf wenigstens einen Empfänger umgelenkt werden und aus den reflektierten Lichtpulsen, die mit dem wenigstens einen Empfänger empfangen werden, auf die Funktionsfähigkeit der Licht-Umlenkeinrichtung geschlossen wird. Auf diese Weise können Fehlfunktionen im Zusammenhang mit der Licht-Umlenkeinrichtung effizient und schnell erfasst werden.

Bei einer weiteren vorteilhaften Ausgestaltung des Verfahrens kann eine Temperatur des ersten Halbleiterelements und/oder eine Wellenlänge der Lichtpulse, die mit dem ersten Halbleiterelement ausgesendet werden, aus den Lichtpulsen, die mit wenigstens einem zweiten Halbleiterelement ausgesendet werden und mit wenigstens einem Empfänger empfangen werden, ermittelt werden. Auf diese Weise kann die Temperatur des ersten Halbleiterelements und/oder die Wellenlänge der mit dem ersten Halbleiterelement ausgesendete Lichtpulse verlustfrei und/oder kontaktlos insbesondere fortwährend überprüft werden.

Bei einer weiteren vorteilhaften Ausgestaltung des Verfahrens kann mit Lichtpulsen, die mit dem wenigstens einen zweiten Halbleiterelement ausgesendet werden und mit wenigstens einem Empfänger empfangen werden, ein Verschmutzungsgrad im optischen Weg der Detektionsvorrichtung überwacht wird. Auf diese Weise kann erkannt werden, falls es zu Störungen der Lichtausbreitung aufgrund von Verschmutzungen kommt.

Bei einer weiteren vorteilhaften Ausgestaltung des Verfahrens kann eine Demodulationsfrequenz und/oder Lock-In-Frequenz des ersten Halbleiterelements auf Basis der Frequenz von Lichtpulsen, die mit dem wenigstens einen zweiten Halbleiterelement ausgesendet und mit wenigstens einem Empfänger empfangen werden, überprüft werden. Auf diese Weise kann die Demodulationsfrequenz und/oder Lock-In-Frequenz des ersten Halbleiterelements in einer modulierten Detektionsvorrichtung, insbesondere einem LiDAR-System, mithilfe des wenigstens einen zweiten Halbleiterelements überprüft werden, da die Lichtemission des wenigstens einen zweiten Halbleiterelements zeitlich von der Lichtemission des ersten Halbleiterelements abhängt.

Im Übrigen gelten die im Zusammenhang mit der erfindungsgemäßen Detektionsvorrichtung und dem erfindungsgemäßen Verfahren und deren jeweiligen vorteilhaften Ausgestaltungen aufgezeigten Merkmale und Vorteile untereinander entsprechend und umgekehrt.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen schematisch
- Figur 1: ein Kraftfahrzeug in der Vorderansicht, mit einer optischen Detektionsvorrichtung zur Überwachung eines Überwachungsbereichs in Fahrtrichtung vor dem Kraftfahrzeug auf Objekte hin;
- Figur 2: eine Schaltskizze einer Detektionsvorrichtung gemäß einem ersten Ausführungsbeispiel für das Kraftfahrzeug aus der Figur 1;
- Figur 3: eine Schaltskizze einer Detektionsvorrichtung gemäß einem zweiten Ausführungsbeispiel für das Kraftfahrzeug aus der Figur 1 ;
- Figur 4: eine seitliche Ansicht des Innenraums einer Detektionsvorrichtung gemäß einem dritten Ausführungsbeispiel für das Kraftfahrzeug aus der Figur 1;
- Figur 5: eine Draufsicht in den Innenraum der Detektionsvorrichtung der Figur 4

In den Figuren sind gleiche Bauteile mit gleichen Bezugszeichen versehen.

### Ausführungsform(en) der Erfindung

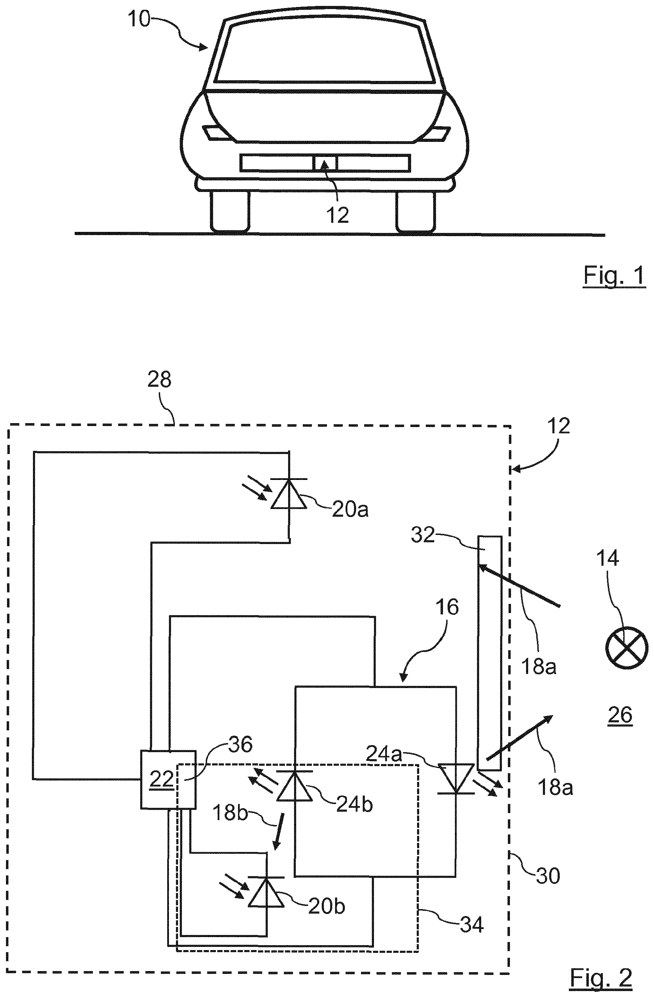

In der Figur 1 ist ein Fahrzeug 10 beispielhaft in Form eines Personenkraftwagens in der Vorderansicht gezeigt. Das Fahrzeug 10 umfasst eine optische Detektionsvorrichtung 12 zur Erfassung von Objekten 14 in Fahrtrichtung vor dem Fahrzeug 10. Die Detektionsvorrichtung 12 ist beispielhaft in der vorderen Stoßstange des Fahrzeugs 10 angeordnet. Ein Objekt 14 ist in der Figur 2 angedeutet, in welcher darüber hinaus eine schematische Schaltskizze der Detektionsvorrichtung 12 gemäß einem ersten Ausführungsbeispiel gezeigt ist. Bei den Objekten 14 kann es sich beispielsweise um andere Fahrzeuge, Personen, Tiere, Fahrbahnbegrenzungen, Gebäude, Fahrbahnunebenheiten oder sonstige Hindernisse handeln.

Die Detektionsvorrichtung 12 kann mit einem hier nicht weiter interessierenden Fahrerassistenzsystem des Fahrzeugs 10 verbunden sein. Mit dem Fahrerassistenzsystem können Fahrfunktionen des Fahrzeugs 10 unterstützt oder gesteuert werden. Mithilfe des Fahrerassistenzsystems kann das Fahrzeug 10 teilautonom oder autonom betrieben werden.

Bei der Detektionsvorrichtung 12 handelt es sich beispielhaft um ein sogenanntes LiDAR-System in Form eines Laserscanners. Der Laserscanner arbeitet nach einem Lichtimpulslaufzeitverfahren. Mit ihm können eine Entfernung, eine Richtung und eine Geschwindigkeit des Objekts 14 relativ zum Fahrzeug 10 ermittelt werden.

Die Detektionsvorrichtung 12 wird im Folgenden anhand der Figur 2 näher erläutert.

Die Detektionsvorrichtung 12 umfasst eine Sendeeinrichtung 16 zur Aussendung von ersten Sendelichtpulsen 18a und zweiten Sendelichtpulsen 18b, einen ersten Empfänger 20a zum Empfangen von an einem etwaigen Objekt 14 reflektierten ersten Sendepulsen 18a und einen zweiten Empfänger 20b zum Empfangen von zweiten Sendelichtpulsen 18b.

Ferner umfasst die Detektionsvorrichtung 12 eine Licht-Umlenkeinrichtung 32 beispielsweise in Form eines drehbaren Umlenkspiegels, mit dem die ersten Sendelichtpulse 18a in einen Überwachungsbereich 26 umgelenkt werden können. Dabei wird durch Schwenken des Umlenkspiegels die Richtung der ersten Sendelichtpulse 18a im Überwachungsbereich 26 geschwenkt, sodass dieser mit den ersten Sendelichtpulsen 18a abgetastet, also abgescannt, werden kann. Ferner können mit der Licht-Umlenkeinrichtung 32 die reflektierten ersten Sendepulse 18a aus dem Überwachungsbereich 26 zu dem ersten Empfänger 20a umgelenkt werden.

Ferner umfasst die Detektionsvorrichtung 12 eine Steuer- und Auswerteeinrichtung 22, welche mit der Sendeeinrichtung 16, den Empfängern 20a und 20b und der Licht-Umlenkeinrichtung 32 verbunden ist. Mit der Steuer- und Auswerteeinrichtung 22 können die Sendeeinrichtung 16 und die Licht- Umlenkeinrichtung 32 gesteuert und mit den Empfängern 20a und 20b empfangene Sendelichtpulse 18a und 18b entsprechend ausgewertet werden.

Die Sendeeinrichtung 16, die Empfänger 20a und 20b, die Licht-Umlenkeinrichtung 32 und die Steuer- und Auswerteeinrichtung 22 sind in einem Gehäuse 28 angeordnet, welches in der Figur 2 beispielhaft gestrichelt angedeutet ist. Auf der Seite, welcher dem Überwachungsbereich 26 zugewandt ist, weist das Gehäuse 28 ein lichtdurchlässiges Fenster 30 auf.

Mit der Sendeeinrichtung 16 können erste Sendelichtpulse 18a gesendet und mit der Licht-Umlenkeinrichtung 32 in den Überwachungsbereich 26 umgelenkt werden. Die ersten Sendelichtpulse 18a werden an dem Objekt 14 reflektiert, zu der Detektionsvorrichtung 12 zurückgesendet, mit der Licht-Umlenkeinrichtung 32 umgelenkt und von dem ersten Empfänger 20a empfangen. Aus der Lichtlaufzeit, also aus der Zeit zwischen dem Versenden der ersten Sendelichtpulse 18a und dem Empfangen der reflektierten ersten Sendelichtpulse 18a wird mit der Steuer- und Auswerteeinrichtung 22 die Entfernung des Objekts 14 ermittelt.

Die Empfänger 20a und 20b sind beispielhaft als Fotodioden ausgestaltet.

Die Sendeeinrichtung 16 umfasst ein erstes Halbleiterelement in Form einer ersten Laserdiode 24a zum Aussenden der ersten Sendelichtpulse 18a und ein zweites lichtemittierendes Halbleiterelement in Form einer zweiten Laserdiode 24b zum Aussenden der zweiten Sendelichtpulse 18b. Beispielhaft kann es sich bei den Laserdioden 24a und 24b um Laserdioden gleicher Bauart handeln, welche Sendelichtpulse mit der gleichen Wellenlänge aussenden können. Die Laserdioden 24a und 24b senden beispielhaft Licht im Infrarotbereich aus. Ferner haben die Laserdioden 24a und 24b beispielhaft die gleiche Ansprechgeschwindigkeiten.

Die erste Laserdiode 24a und die zweite Laserdiode 24b sind bezüglich einer elektrischen Spannung parallel und bezüglich ihrer Durchlassrichtung und ihrer Sperrrichtung entgegengesetzt geschaltet, insgesamt also antiparallel geschaltet.

Die erste Laserdiode 24a dient zur Überwachung des Überwachungsbereichs 26.

Bekanntermaßen bilden elektrische Leiter in dem Schaltkreis der Sendeeinrichtung 16 Induktivitäten. Durch die Induktivitäten wird im Abschaltmoment der ersten Laserdiode 24a nach dem aussenden eines ersten Sendelichtpulses 18a ein entsprechender Induktionsspannungspuls erzeugt. Der Induktionsspannungspuls ist dem Spannungspuls zur Erzeugung der ersten Sendelichtpuls 18a entgegengerichtet. Die zweite Laserdiode 24a wirkt dabei als Schutzdiode, durch welche ein dem Induktionsspannungspuls folgender elektrischer Strom geleitet wird. Dabei wird mit der zweiten Laserdiode 24a ein zweiter Sendelichtimpuls 18b ausgesendet.

Die zweite Laserdiode 24b ist in den Innenraum des Gehäuses 28, also in eine andere Raumrichtung wie die erste Laserdiode 24a, gerichtet. Die mit der zweiten Laserdiode 24b ausgesendeten zweiten Sendelichtpulse 18b werden von dem zweiten Empfänger 20b empfangen.

Die Lichtwege der ersten Laserdiode 24a und der zweiten Laserdiode 24b sind optisch entkoppelt, sodass sie sich gegenseitig nicht stören.

Beispielhaft können die erste Laserdiode 24a, die zweite Laserdiode 24b und etwa erforderliche weitere elektronische oder elektrische Bauteile auf einer gemeinsamen Leiterplatte realisiert sein. Alternativ können die erste Laserdiode 24a und die zweite Laserdiode 24b auf einem gemeinsamen Substrat oder in einem gemeinsamen Chip gegebenenfalls mit weiteren elektronischen Bauteilen realisiert sein.

Außerdem verfügt die Detektionsvorrichtung 12 über eine Funktionsprüfungseinrichtung 34, mit der die Funktionsfähigkeit der Detektionsvorrichtung 12 überwacht werden kann. Die Funktionsprüfungseinrichtung 34 umfasst beispielhaft die zweite Laserdiode 24b, den zweiten Empfänger 20b und entsprechende Prüfungsmittel 36, beispielsweise in Form von Algorithmen, in der Steuer- und Auswerteeinrichtungen 22, mit denen die entsprechenden Funktionsprüfungen durchgeführt werden können.

Mit der Funktionsprüfungseinrichtung 34 wird eine Lichtmenge und der zeitliche Verlauf des Lichts der Sendelichtpulse 18b, die mit der zweiten Laserdiode 24b emittiert und von dem zweiten Empfänger 20b empfangen werden, ermittelt und daraus eine Sendeleistung der ersten Laserdiode 24a ermittelt. Hierbei wird die Kenntnis verwendet, dass die von der zweiten Laserdiode 24b emittierte Lichtmenge proportional zu der Lichtmenge ist, welche mit der ersten Laserdiode 24a emittiert wird. Außerdem ist die von der zweiten Laserdiode 24b emittierte Lichtmenge zeitlich abhängig von der Lichtmenge, welche mit der ersten Laserdiode 24a emittiert wird.

Ferner wird mit der Funktionsprüfungseinrichtung 34 eine Temperatur der ersten Laserdiode 24a und eine Wellenlänge der ersten Sendelichtpulse 18a, die mit der ersten Laserdiode 24a ausgesendet werden, aus den zweiten Sendelichtpulsen 18b, die mit der zweiten Laserdiode 24b ausgesendet werden und mit dem zweiten Empfänger 20b empfangen werden, ermittelt. So werden die Temperatur und die Wellenlänge verlustfrei und kontaktlos fortwährend überwacht. Die erste Laserdiode 24a und die zweite Laserdiode 24b sind bevorzugt so nah beieinander angeordnet sind, dass eine gute Wärmeübertragung ermöglicht wird.

Die Funktionsprüfungseinrichtung 34 kann zur Temperaturüberprüfung beispielsweise einen optischen Bandpass beispielsweise mit geringer Güte umfassen, welcher dem zweiten Empfänger 20b zugeordnet ist. Die Wellenlänge der emittierten zweiten Sendelichtpulse 18b verändert sich mit der Temperatur der zweiten Laserdiode 24b. Mithilfe des optischen Bandpasses wird die Änderung der Signalamplitude in dem entsprechenden Wellenlängenbereich ermittelt und daraus die Temperatur der zweiten Laserdiode 24b ermittelt. Da die erste Laserdiode 24a eine wärmetechnische Verbindung mit der zweiten Laserdiode 24b aufweist, entspricht die Temperatur der ersten Laserdiode 24a der Temperatur der der zweiten Laserdiode 24b. So wird also aus den zweiten Sendelichtpulsen 18b die Temperatur der ersten Laserdiode 24a ermittelt.

Außerdem wird mit der Funktionsprüfungseinrichtung 34 ein Verschmutzungsgrad im optischen Weg der Detektionsvorrichtung 12 mithilfe von Reflexionsmessungen mit der zweiten Laserdiode 24b und dem zweiten Empfänger 20b ermittelt. So wird erkannt, falls es zu Störungen der Lichtausbreitung aufgrund von Verschmutzungen kommt. Sobald Verschmutzungen erkannt werden, werden hier nicht weiter interessierende Systemparameter der Detektorvorrichtung 12 entsprechend angepasst. Zusätzlich werden Reinigungsmaßnahmen eingeleitet.

Des Weiteren wird mit der Funktionsprüfungseinrichtung 34 eine Demodulationsfrequenz und eine Lock-In-Frequenz der ersten Laserdiode 24a auf Basis der Frequenz der zweiten Sendelichtpulse 18b, die mit der zweiten Laserdiode 24b ausgesendet und mit dem zweiten Empfänger 20b empfangen werden, überprüft. Die Lichtemission der zweiten Laserdiode 24b hängt zeitlich von der Lichtemission der ersten Laserdiode 24a ab.

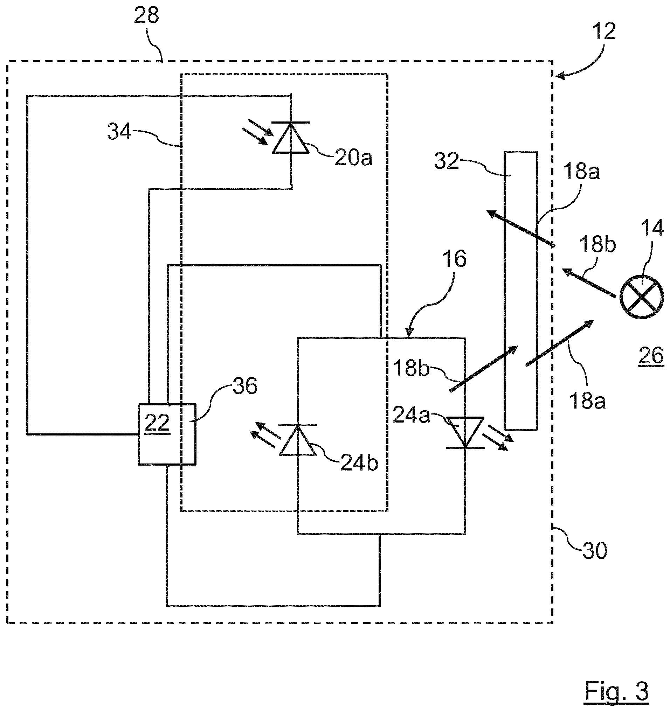

In der Figur 3 ist eine Detektionsvorrichtung 12 gemäß einem zweiten Ausführungsbeispiel gezeigt. Diejenigen Elemente, die zu denen des ersten Ausführungsbeispiels aus der Figur 2 ähnlich sind, sind mit denselben Bezugszeichen versehen. Im Unterschied zum ersten Ausführungsbeispiel sind beim zweiten Ausführungsbeispiel sowohl die erste Laserdiode 24a als auch die zweite Laserdiode 24b über die Licht-Umlenkeinrichtung 32 in den Überwachungsbereich 26 gerichtet.

Auf den zweiten Empfänger 20b wird beim zweiten Ausführungsbeispiel verzichtet. Der erste Empfänger 20a dient zum Empfang sowohl von ersten Sendelichtpulsen 18a der ersten Laserdiode 24a als auch von zweiten Sendelichtpulsen 18b der zweiten Laserdiode 24b. Die Funktionsprüfungseinrichtung 34 wird beim zweiten Ausführungsbeispiel analog zum ersten Ausführungsbeispiel eingesetzt.

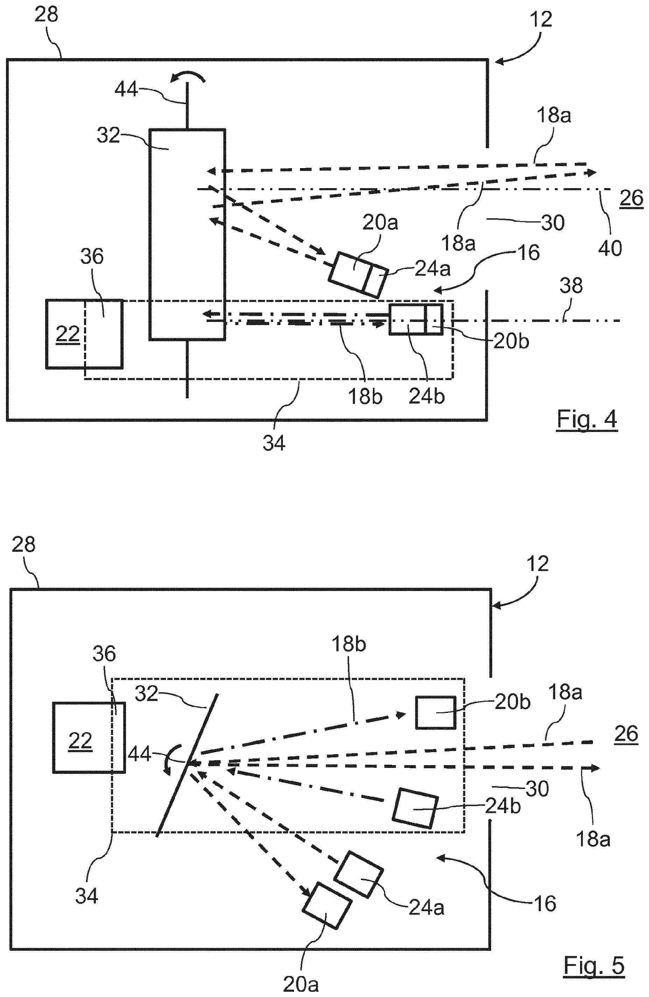

In den Figuren 4 und 5 ist eine Detektionsvorrichtung 12 gemäß einem dritten Ausführungsbeispiel gezeigt. Diejenigen Elemente, die zu denen des ersten Ausführungsbeispiels aus der Figur 2 ähnlich sind, sind mit denselben Bezugszeichen versehen.

Im Unterschied zum ersten Ausführungsbeispiel sind beim dritten Ausführungsbeispiel die zweite Laserdiode 24b und der zweite Empfänger 20b bezüglich der Licht-Umlenkeinrichtung 32 so angeordnet, dass die Licht-Umlenkeinrichtung 32 in einer ersten optischen Achse 38 mit der zweiten Laserdiode 24b mit dem zweiten Sendelichtpulsen 18b angestrahlt wird. In einer zweiten optischen Achse 40, welche sich von der ersten optischen Achse 38 unterscheidet, wird die Licht-Umlenkeinrichtung 32 mit der ersten Laserdiode 24a mit ersten Sendelichtpulsen 18a angestrahlt, sodass diese in den Überwachungsbereich 26 umgelenkt werden. An etwaigen Objekten 14 im Überwachungsbereich 26 reflektierte erste Sendelichtpulse 18a werden in der zweiten optischen Achse 40 mit der Licht-Umlenkeinrichtung 32 zu dem ersten Empfänger 20a umgelenkt.

Der zweite Empfänger 20a ist dabei so innerhalb des Gehäuses 28 angeordnet, dass er bei Einstellungen der Licht-Umlenkeinrichtung 32, in der die maximale Lichtablenkung erreicht wird, direkt mit den reflektierten zweiten Sendelichtpulsen 18b angestrahlt wird.

Die zweiten Sendelichtpulse 18b verlassen also nicht das Gehäuse 28.

Bei dem dritten Ausführungsbeispiel wird also zusätzlich zu den Funktionsprüfungen aus dem ersten Ausführungsbeispiel mit der Funktionsprüfungseinrichtung 34 die Funktionsfähigkeit der Licht-Umlenkeinrichtung 32 überprüft. Aus den reflektierten zweiten Sendelichtpulsen 18b, die mit dem zweiten Empfänger 20b empfangen werden, wird auf die Funktionsfähigkeit der Licht-Umlenkeinrichtung 32 geschlossen. Beim Erkennen von Fehlfunktionen im Zusammenhang mit der Licht-Umlenkeinrichtung 32 werden Gegenmaßnahmen ergriffen. Beispielsweise werden die Sendeleistungen der Laserdioden 24a und 24b reduziert. Ferner wird die Detektorvorrichtung sicher abgeschaltet.

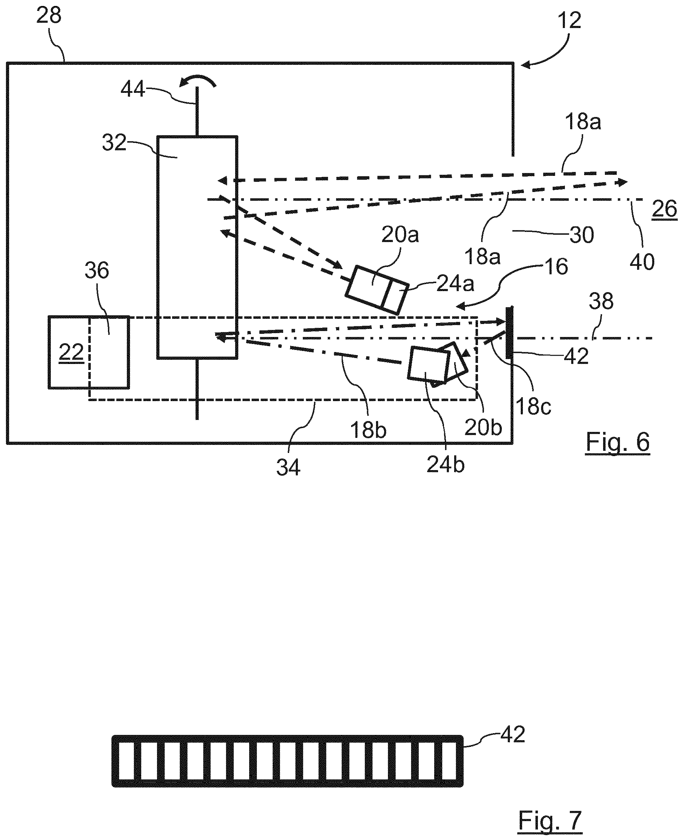

In den Figuren 6 und 7 ist eine Detektionsvorrichtung 12 gemäß einem vierten Ausführungsbeispiel gezeigt. Diejenigen Elemente, die zu denen des dritten Ausführungsbeispiels aus den Figuren 4 und 5 ähnlich sind, sind mit denselben Bezugszeichen versehen.

Im Unterschied zum dritten Ausführungsbeispiel weist beim vierten Ausführungsbeispiel zusätzlich die Funktionsprüfungseinrichtung 34 zusätzlich ein Winkelpositions-Erfassungselement 42 auf. Das Winkelpositions-Erfassungselement 42 ist beispielhaft als Streifen mit örtlich veränderten optischen Eigenschaften ausgestaltet. Beispielsweise weist der Streifen eine über seine Länge veränderliche Absorption für die Sendelichtpulse 18b auf.

Das Winkelpositions-Erfassungselement 42 ist, wie in der Figur 6 gezeigt, unterhalb des Fensters 30 an der Innenwand des Gehäuses 28 angeordnet, wobei seine Längsrichtung senkrecht zu einer Schwenkachse 44 der Licht-Umlenkeinrichtung 32 verläuft.

Die zweite Laserdiode 24b und der zweite Empfänger 20b sind im Vergleich zum dritten Ausführungsbeispiel in der Figur 6 nach unten versetzt. Die zweite Laserdiode 24b ist schräg auf die Licht-Umlenkeinrichtung 32 gerichtet. Der Empfänger 20b ist schräg auf das Winkelpositions-Erfassungselement 42 gerichtet.

Die mit der zweiten Laserdiode 24b ausgesendeten zweiten Sendelichtpulse 18b werden mit der Licht-Umlenkeinrichtung 32 reflektiert und auf das Winkelpositions-Erfassungselement 42 gesendet. Abhängig von der Winkelstellung der Licht-Umlenkeinrichtung 32 werden die zweiten Sendelichtpulse 18b an einer entsprechenden Stelle des Winkelpositions-Erfassungselement 42 durch die an dieser Stelle charakteristische optische Eigenschaft des Winkelpositions-Erfassungselement 42 verändert und als Positionslichtpulse 18c reflektiert oder gestreut. Die Positionslichtpulse 18c tragen Informationen über die Winkelstellung der Licht-Umlenkeinrichtung 32. Die Positionslichtpulse 18c werden mit dem zweiten Empfänger 20b empfangen und in entsprechende elektrische Positionssignale umgewandelt. Die elektrischen Positionssignale werden mit dem Prüfungsmittel 36 der Steuer-Auswerteeinrichtungen 22 ausgewertet. Aus den elektrischen Positionssignale wird eine Umlenkstellung beispielhaft die Winkelstellung der Licht-Umlenkeinrichtung 32 ermittelt und verifiziert.

Mithilfe des Winkelpositions-Erfassungselement 42 kann beispielhaft jederzeit eine Information über die Winkelstellung der Licht-Umlenkeinrichtung 32 ermittelt werden. Außerdem kann so beispielhaft jederzeit Kenntnis darüber erlangt werden, ob die Licht-Umlenkeinrichtung 32 schwingt. Falls erkannt wird, dass die Licht-Umlenkeinrichtung 32 nicht schwingt, kann aus Sicherheitsgründen die Detektionsvorrichtung 12, im Besonderen das Aussenden von Sendelichtpulsen 18a und 18b, gestoppt werden.

Bei dem dritten Ausführungsbeispiel kann der zweite Empfänger 20b statt auf das Winkelpositions-Erfassungselement 42 direkt auch anders ausgerichtet sein. In diesem Fall können mit dem zweiten Empfänger 20b die Positionslichtpulse 18c mit dem zweiten Empfänger 20b auch indirekt beispielsweise als Mehrfachreflexion erfasst werden.

Bei den gezeigten Ausführungsbeispielen können alle oder nur ein Teil der erläuterten Funktionsprüfungen durchgeführt werden.

Bei weiteren, nicht gezeigten Ausführungsbeispielen können die erste Laserdiode 24a und die zweite Laserdiode 24b unterschiedliche Bauart aufweisen. Sie können Sendelichtpulse mit unterschiedlichen Wellenlängen aussenden. Auf diese Weise kann eine optische Entkopplung zwischen der ersten Laserdiode 24a und der zweiten Laserdiode 24b vereinfacht werden. Bei einer der beiden Laserdioden 24a oder 24b kann es sich statt um eine Laserdiode auch um ein anderes lichtemittierendes Halbleiterelement, beispielsweise eine gewöhnliche Leuchtdiode, handeln.

## Patentansprüche

1. Optische Detektionsvorrichtung (12) zur Erfassung von Objekten (14),
- mit wenigstens einer Sendeeinrichtung (16) zur Aussendung von Lichtpulsen (18a, 18b), wobei Sendeeinrichtung (16) aufweist ein als Diode ausgebildetes lichtemittierendes erstes Halbleiterelement (24a), um einen Raumbereich in der Umgebung anzustrahlen, welches bezüglich einer elektrischen Spannung eine Sperrrichtung und eine Durchlassrichtung aufweist, wobei das erste Halbleiterelement (24a) bei Anlegen einer elektrischen Spannung in seiner Durchlassrichtung Licht (18a) aussendet, - mit wenigstens einem Empfänger (20a, 20b), mit dem die Lichtpulse (18a, 18b) empfangen werden können,
- mit wenigstens einer Steuer- und Auswerteeinrichtung (22) zur Steuerung der wenigstens einen Sendeeinrichtung (16) und des wenigstens einen Empfängers (20a, 20b) und zur Auswertung von mit dem wenigstens einen Empfänger (20a, 20b) empfangenen Lichtpulsen (18a, 18b),
- und mit einer Funktionsprüfungseinrichtung (34),
**dadurch gekennzeichnet, dass**
die wenigstens eine Sendeeinrichtung (16) aufweist
- wenigstens ein als Diode ausgebildetes lichtemittierendes zweites Halbleiterelement (24b), welches bezüglich einer elektrischen Spannung eine Sperrrichtung und eine Durchlassrichtung aufweist, wobei das zweite Halbleiterelement (24b) beim Anlegen einer elektrischen Spannung in seiner Durchlassrichtung Licht (18b) aussendet,
- wobei das erste Halbleiterelement (24a) und das wenigstens eine zweite Halbleiterelement (24b) bezüglich der elektrischen Spannung parallel und bezüglich ihrer Sperrrichtungen entgegengesetzt geschaltet sind,
- wobei das zweite Halbleiterelement (24b) Teil der Funktionsprüfungseinrichtung (34) der Detektionsvorrichtung (12) ist,
und wobei im Abschaltmoment des ersten Halbleiterelements (24a) mit elektrischen Induktivitäten der Sendeeinrichtung (16) wenigstens ein Induktionsspannungspuls erzeugt wird, welcher dem Sendespannungspuls entgegen gerichtet ist, und der Induktionsspannungspuls an dem wenigstens einen lichtemittierenden zweiten Halbleiterelement (24b) angelegt wird, sodass mit dem wenigstens einen zweiten Halbleiterelement (24b) infolge des Induktionsspannungspulses ein Lichtpuls (18b) emittiert wird, und der Empfänger (20a, 20b) der Detektionsvorrichtung (12) dazu vorgesehen ist, den vom zweiten Halbleiterelement (24b) emittierten Lichtpuls (24b) direkt oder indirekt zu empfangen, und die Funktionsprüfungseinrichtung (34) dazu vorgesehen ist, aus dem empfangenen Lichtpuls (18b) auf die Funktionsfähigkeit wenigstens von Teilen der Detektionsvorrichtung (12) zu schließen.

2. Detektionsvorrichtung nach Anspruch 1, **dadurch gekennzeichnet, dass,** die Funktionsprüfungseinrichtung (34) Mittel (20b, 24b, 36) aufweist, mit welchen eine Lichtmenge und/oder ein zeitlicher Verlauf von Lichtpulsen (18b), die mit dem wenigstens einen zweiten Halbleiterelement (24b) emittiert werden, ermittelt werden kann und daraus eine Sendeleistung des ersten Halbleiterelements (24a) ermittelt werden kann.

3. Detektionsvorrichtung nach Anspruch 1 oder 2, **dadurch gekennzeichnet, dass,** die Funktionsprüfungseinrichtung (34) Mittel (20b, 24b, 36) aufweist, mit welchen die Funktionsfähigkeit wenigstens einer Licht-Umlenkeinrichtung (32) der Detektionsvorrichtung (12) überprüft werden kann, wobei mit der Licht-Umlenkeinrichtung (32) Lichtpulse (18a), die mit dem ersten Halbleiterelement (24a) ausgesendet werden, in einen Überwachungsbereich (26) umgelenkt werden und/oder reflektierte Lichtpulse (18a) aus dem Überwachungsbereich (26) auf wenigstens einen Empfänger (20a) umgelenkt werden, wobei wenigstens ein zweites Halbleiterelement (24b) so auf die Licht-Umlenkeinrichtung (32) gerichtet ist, dass mit dem wenigstens einen zweiten Halbleiterelement (24b) ausgesendeten Lichtpulse (18b) auf wenigstens einen Empfänger (20b) umgelenkt werden können und aus den reflektierten Lichtpulsen (18b), die mit dem wenigstens einen zweiten Empfänger (20b) empfangen werden können, auf die Funktionsfähigkeit der Licht-Umlenkeinrichtung (32) geschlossen werden kann.

4. Detektionsvorrichtung nach einem der vorigen Ansprüche, **dadurch gekennzeichnet, dass** die Funktionsprüfungseinrichtung (34) Mittel (20b, 24b, 36) aufweist, mit welchen eine Temperatur des ersten Halbleiterelements (24a) und/oder eine Wellenlänge der Lichtpulse (18a), die mit dem ersten Halbleiterelement (24a) ausgesendet werden können, aus Lichtpulsen (18b), die mit wenigstens einem zweiten Halbleiterelement (24b) ausgesendet werden können und mit wenigstens einem Empfänger (20b) empfangen werden können, ermittelt werden kann.

5. Detektionsvorrichtung nach einem der vorigen Ansprüche, **dadurch gekennzeichnet, dass** die Funktionsprüfungseinrichtung (34) wenigstens einen optischen Bandpass umfasst, welcher wenigstens einem Empfänger (20b) zugeordnet ist.

6. Detektionsvorrichtung nach einem der vorigen Ansprüche, **dadurch gekennzeichnet, dass** die Funktionsprüfungseinrichtung (34) Mittel (20b, 24b, 36) aufweist, mit denen ein Verschmutzungsgrad im optischen Weg der Detektionsvorrichtung (12) überprüft werden kann.

7. Detektionsvorrichtung nach einem der vorigen Ansprüche, **dadurch gekennzeichnet, dass** die Funktionsprüfungseinrichtung (34) Mittel (20b, 24b, 36) aufweist, mit denen eine Demodulationsfrequenz und/oder Lock-In-Frequenz des ersten Halbleiterelements (24a) auf Basis der Frequenz von Lichtpulsen (18b), die mit wenigstens einem zweiten Halbleiterelement (24b) ausgesendet und mit wenigstens einem Empfänger (20b) empfangen werden können, überprüft werden kann.

8. Detektionsvorrichtung nach einem der vorigen Ansprüche, **dadurch gekennzeichnet, dass** die Funktionsprüfungseinrichtung (34) Mittel (42) aufweist, mit denen eine Umlenkstellung einer Licht-Umlenkeinrichtung (32) ermittelt werden kann.

9. Verfahren zum Betreiben einer Detektionsvorrichtung (12), die zur Erfassung von Objekten (14) vorgesehen ist, wobei bei dem Verfahren Lichtpulse (18a, 18b) mit einer Sendeeinrichtung (16) ausgesendet werden, die Lichtpulse (18a, 18b) direkt oder indirekt mit wenigstens einem Empfänger (20a, 20b) empfangen werden und die empfangenen Lichtpulsen (18a, 18b) mit wenigstens einer Steuer- und Auswerteeinrichtung (22) ausgewertet werden, **dadurch gekennzeichnet, dass,** ein elektrischer Sendespannungspuls in Durchlassrichtung an einem als Diode ausgebildeten lichtemittierenden ersten Halbleiterelement (24a) angelegt und mit dem ersten Halbleiterelement (24a) ein entsprechender Lichtpuls (18a) ausgesendet wird, im Abschaltmoment des ersten Halbleiterelements (24a) mit elektrischen Induktivitäten der Sendeeinrichtung (16) wenigstens ein Induktionsspannungspuls erzeugt wird, welcher dem Sendespannungspuls entgegen gerichtet ist, und der Induktionsspannungspuls an wenigstens einem als Diode ausgebildeten lichtemittierenden zweiten Halbleiterelement (24b) angelegt wird, welches zu dem ersten Halbleiterelement (24a) antiparallel geschaltet ist, sodass mit dem wenigstens einen zweiten Halbleiterelement (24b) infolge des Induktionsspannungspulses ein Lichtpuls (18b) emittiert wird und mit wenigstens einem Empfänger (20b) direkt oder indirekt empfangen wird und mittels einer Funktionsprüfungseinrichtung (34 ) aus dem empfangenen Lichtpuls (18b) auf die Funktionsfähigkeit wenigstens von Teilen der Detektionsvorrichtung (12) geschlossen wird,

10. Verfahren nach Anspruch 9, **dadurch gekennzeichnet, dass** eine Lichtmenge und/oder ein zeitlicher Verlauf des Lichts von Lichtpulsen (18b), die mit dem wenigstens einen zweiten Halbleiterelement (24b) emittiert werden, ermittelt wird und daraus eine Sendeleistung des ersten Halbleiterelements (24a) ermittelt wird.

11. Verfahren nach Anspruch 9 oder 10, **dadurch gekennzeichnet, dass** die Funktionsfähigkeit wenigstens einer Licht-Umlenkeinrichtung (32) der Detektionsvorrichtung (12) überprüft wird, indem wenigstens ein zweites Halbleiterelement (24b) so auf die Licht-Umlenkeinrichtung (32) gerichtet wird, dass mit dem wenigstens einen zweiten Halbleiterelement (24b) ausgesendete Lichtpulse (18b) auf wenigstens einen Empfänger (20b) umgelenkt werden und aus den reflektierten Lichtpulsen (18b), die mit dem wenigstens einen Empfänger (20b) empfangen werden, auf die Funktionsfähigkeit der Licht-Umlenkeinrichtung (32) geschlossen wird.

12. Verfahren nach einem der Ansprüche 9 bis 11, **dadurch gekennzeichnet, dass** eine Temperatur des ersten Halbleiterelements (24a) und/oder eine Wellenlänge der Lichtpulse (18a), die mit dem ersten Halbleiterelement (24a) ausgesendet werden, aus den Lichtpulsen (18b), die mit wenigstens einem Halbleiterelement (24b) ausgesendet werden und mit wenigstens einem Empfänger (20b) empfangen werden, ermittelt wird.

13. Verfahren nach einem der Ansprüche 9 bis 12, **dadurch gekennzeichnet, dass** mit Lichtpulsen (18b), die mit dem wenigstens einen zweiten Halbleiterelement (24b) ausgesendet werden und mit wenigstens einem Empfänger (20b) empfangen werden, ein Verschmutzungsgrad im optischen Weg der Detektionsvorrichtung (12) überwacht wird.

14. Verfahren nach einem der Ansprüche 9 bis 13, **dadurch gekennzeichnet, dass** eine Demodulationsfrequenz und/oder Lock-In-Frequenz des ersten Halbleiterelements (24a) auf Basis der Frequenz von Lichtpulsen (18b), die mit dem wenigstens einen zweiten Halbleiterelement (24b) ausgesendet und mit wenigstens einem Empfänger (20b) empfangen werden, überprüft wird.

## Claims

1. Optical detection apparatus (12) for detecting objects (14),
- comprising at least one transmitting device (16) for emitting light pulses (18a, 18b), wherein transmitting device (16) has a light-emitting first semiconductor element (24a) embodied as a diode in order to irradiate a spatial region in the surroundings, said semiconductor element having a reverse direction and a forward direction with respect to an electrical voltage, wherein the first semiconductor element (24a) emits light (18a) when an electrical voltage is applied in its forward direction, - comprising at least one receiver (20a, 20b), by which the light pulses (18a, 18b) can be received,
- comprising at least one control and evaluation device (22) for controlling the at least one transmitting device (16) and the at least one receiver (20a, 20b) and for evaluating light pulses (18a, 18b) received by the at least one receiver (20a, 20b),
- and comprising a function checking device (34),
**characterized in that**
the at least one transmitting device (16) has
- at least one light-emitting second semiconductor element (24b) which is embodied as a diode and which has a reverse direction and a forward direction with respect to an electrical voltage, wherein the second semiconductor element (24b) emits light (18b) when an electrical voltage is applied in its forward direction,
- wherein the first semiconductor element (24a) and the at least one second semiconductor element (24b) are connected in parallel with respect to the electrical voltage and oppositely with respect to their reverse directions,
- wherein the second semiconductor element (24b) is part of the function checking device (34) of the detection apparatus (12),
and wherein at the moment when the first semiconductor element (24a) is turned off, with electrical inductances of the transmitting device (16), at least one induced voltage pulse is generated which is directed oppositely to the transmission voltage pulse, and the induced voltage pulse is applied to the at least one light-emitting second semiconductor element (24b), such that the at least one second semiconductor element (24b) emits a light pulse (18b) owing to the induced voltage pulse, and the receiver (20a, 20b) of the detection apparatus (12) is provided for directly or indirectly receiving the light pulse (24b) emitted by the second semiconductor element (24b), and the function checking device (34) is provided for deducing the functionality of at least parts of the detection apparatus (12) from the received light pulse (18b).

2. Detection apparatus according to Claim 1, **characterized in that** the function checking device (34) has means (20b, 24b, 36) with which a quantity of light and/or a temporal profile of light pulses (18b) which are emitted by the at least one second semiconductor element (24b) can be determined and a transmission power of the first semiconductor element (24a) can be determined therefrom.

3. Detection apparatus according to Claim 1 or 2, **characterized in that** the function checking device (34) has means (20b, 24b, 36) with which the functionality of at least one light deflection device (32) of the detection apparatus (12) can be checked, wherein by way of the light deflection device (32) light pulses (18a) emitted by the first semiconductor element (24a) are deflected into a monitoring region (26) and/or reflected light pulses (18a) from the monitoring region (26) are deflected to at least one receiver (20a), wherein at least one second semiconductor element (24b) is directed to the light deflection device (32) such that light pulses (18b) emitted by the at least one second semiconductor element (24b) can be deflected to at least one receiver (20b) and the functionality of the light deflection device (32) can be deduced from the reflected light pulses (18b) which can be received by the at least one second receiver (20b).

4. Detection apparatus according to any of the preceding claims, **characterized in that** the function checking device (34) has means (20b, 24b, 36) with which a temperature of the first semiconductor element (24a) and/or a wavelength of the light pulses (18a) which can be emitted by the first semiconductor element (24a) can be determined from light pulses (18b) which can be emitted by at least one second semiconductor element (24b) and can be received by at least one receiver (20b).

5. Detection apparatus according to any of the preceding claims, **characterized in that** the function checking device (34) comprises at least one optical bandpass filter assigned to at least one receiver (20b).

6. Detection apparatus according to any of the preceding claims, **characterized in that** the function checking device (34) has means (20b, 24b, 36) with which a degree of contamination in the optical path of the detection apparatus (12) can be checked.

7. Detection apparatus according to any of the preceding claims, **characterized in that** the function checking device (34) has means (20b, 24b, 36) with which a demodulation frequency and/or lock-in frequency of the first semiconductor element (24a) can be checked on the basis of the frequency of light pulses (18b) which can be emitted by at least one second semiconductor element (24b) and can be received by at least one receiver (20b).

8. Detection apparatus according to any of the preceding claims, **characterized in that** the function checking device (34) has means (42) with which a deflection position of a light deflection device (32) can be determined.

9. Method for operating a detection apparatus (12) provided for detecting objects (14), wherein in the method light pulses (18a, 18b) are emitted by a transmitting device (16), the light pulses (18a, 18b) are directly or indirectly received by at least one receiver (20a, 20b) and the received light pulses (18a, 18b) are evaluated by at least one control and evaluation device (22), **characterized in that** an electrical transmission voltage pulse in the forward direction is applied to a light-emitting first semiconductor element (24a) embodied as a diode and a corresponding light pulse (18a) is emitted by the first semiconductor element (24a), and at the moment when the first semiconductor element (24a) is turned off, with electrical inductances of the transmitting device (16), at least one induced voltage pulse is generated which is directed oppositely to the transmission voltage pulse, and the induced voltage pulse is applied to at least one light-emitting second semiconductor element (24b) which is embodied as a diode and which is connected in antiparallel with the first semiconductor element (24a), such that a light pulse (18b) is emitted by the at least one second semiconductor element (24b) owing to the induced voltage pulse, and is directly or indirectly received by at least one receiver (20b), and the functionality of at least parts of the detection apparatus (12) is deduced from the received light pulse (18b) by means of a function checking device (34).

10. Method according to Claim 9, **characterized in that** a quantity of light and/or a temporal profile of the light of light pulses (18b) which are emitted by the at least one second semiconductor element (24b) are/is determined and a transmission power of the first semiconductor element (24a) is determined therefrom.

11. Method according to Claim 9 or 10, **characterized in that** the functionality of at least one light deflection device (32) of the detection apparatus (12) is checked by virtue of the fact that at least one second semiconductor element (24b) is directed to the light deflection device (32) such that light pulses (18b) emitted by the at least one second semiconductor element (24b) are deflected to at least one receiver (20b) and the functionality of the light deflection device (32) is deduced from the reflected light pulses (18b) which are received by the at least one receiver (20b).

12. Method according to any of Claims 9 to 11, **characterized in that** a temperature of the first semiconductor element (24a) and/or a wavelength of the light pulses (18a) which are emitted by the first semiconductor element (24a) are/is determined from the light pulses (18b) which are emitted by at least one semiconductor element (24b) and are received by at least one receiver (20b).

13. Method according to any of Claims 9 to 12, **characterized in that** a degree of contamination in the optical path of the detection apparatus (12) is monitored by way of light pulses (18b) which are emitted by the at least one second semiconductor element (24b) and are received by at least one receiver (20b).

14. Method according to any of Claims 9 to 13, **characterized in that** a demodulation frequency and/or lock-in frequency of the first semiconductor element (24a) are/is checked on the basis of the frequency of light pulses (18b) which are emitted by the at least one second semiconductor element (24b) and are received by at least one receiver (20b).

## Revendications

1. Arrangement de détection optique (12) destiné à détecter des objets (14),
- comprenant au moins un dispositif d'émission (16) destiné à émettre des impulsions lumineuses (18a, 18b), le dispositif d'émission (16) comportant un premier élément semiconducteur électroluminescent (24a) réalisé sous forme de diode pour irradier une zone spatiale dans l'environnement, qui présente une direction de blocage et une direction de passage en référence à une tension électrique, le premier élément semiconducteur (24a) émettant de la lumière (18a) lors de l'application d'une tension électrique dans sa direction de passage, - comprenant au moins un récepteur (20a, 20b) permettant de recevoir les impulsions lumineuses (18a, 18b),
- comprenant au moins un dispositif de commande et d'interprétation (22) destiné à commander ledit au moins un dispositif d'émission (16) et ledit au moins un récepteur (20a, 20b) et à interpréter les impulsions lumineuses (18a, 18b) reçues par ledit au moins un récepteur (20a, 20b),
- et comprenant un dispositif d'essai de fonctionnement (34),
**caractérisé en ce que**
ledit au moins un dispositif d'émission (16) comporte
- au moins un deuxième élément semiconducteur électroluminescent (24b) réalisé sous forme de diode, qui présente une direction de blocage et une direction de passage en référence à une tension électrique, le deuxième élément semiconducteur (24b) émettant de la lumière (18b) lors de l'application d'une tension électrique dans sa direction de passage,
- le premier élément semiconducteur (24a) et ledit au moins un deuxième élément semiconducteur (24b) étant connectés en parallèle en référence à la tension électrique et de manière opposée en référence à leurs directions de blocage,
- le deuxième élément semiconducteur (24b) faisant partie du dispositif d'essai de fonctionnement (34) de l'arrangement de détection (12),
et dans lequel, au moment de la coupure du premier élément semiconducteur (24a) au moyen d'inductances électriques du dispositif d'émission (16), au moins une impulsion de tension d'induction est générée, laquelle est dirigée à l'opposé de l'impulsion de tension d'émission, et l'impulsion de tension d'induction est appliquée audit deuxième élément semiconducteur électroluminescent (24b), de sorte qu'une impulsion lumineuse (18b) est émise par ledit au moins un deuxième élément semiconducteur (24b) en raison de l'impulsion de tension d'induction, et le récepteur (20a, 20b) de l'arrangement de détection (12) est prévu pour recevoir directement ou indirectement l'impulsion lumineuse (24b) émise par le deuxième élément semiconducteur (24b), et le dispositif d'essai de fonctionnement (34) est prévu pour déduire de l'impulsion lumineuse (18b) reçue la capacité fonctionnelle d'au moins certaines parties de l'arrangement de détection (12).

2. Arrangement de détection selon la revendication 1, **caractérisé en ce que** le dispositif d'essai de fonctionnement (34) comporte des moyens (20b, 24b, 36) permettant de déterminer une quantité de lumière et/ou une évolution temporelle des impulsions lumineuses (18b) émises par ledit au moins un deuxième élément semiconducteur (24b), et de déterminer une puissance d'émission du premier élément semiconducteur (24a) à partir de celles-ci.

3. Arrangement de détection selon la revendication 1 ou 2, **caractérisé en ce que** le dispositif d'essai de fonctionnement (34) comporte des moyens (20b, 24b, 36) permettant de vérifier la capacité fonctionnelle d'au moins un dispositif de déviation de lumière (32) de l'arrangement de détection (12), le dispositif de déviation de lumière (32) déviant les impulsions lumineuses (18a) émises par le premier élément semiconducteur (24a) vers une zone de surveillance (26) et/ou déviant les impulsions lumineuses réfléchies (18a) depuis la zone de surveillance (26) vers au moins un récepteur (20a), au moins un deuxième élément semiconducteur (24b) étant dirigé vers le dispositif de déviation de lumière (32) de sorte que les impulsions lumineuses (18b) émises par ledit au moins un deuxième élément semiconducteur (24b) peuvent être déviées vers au moins un récepteur (20b) et que la capacité fonctionnelle du dispositif de déviation de lumière (32) peut être déduite des impulsions lumineuses (18b) réfléchies qui peuvent être reçues par ledit au moins un deuxième récepteur (20b).

4. Arrangement de détection selon l'une quelconque des revendications précédentes, **caractérisé en ce que** le dispositif d'essai de fonctionnement (34) comporte des moyens (20b, 24b, 36) permettant de déterminer une température du premier élément semiconducteur (24a) et/ou une longueur d'onde des impulsions lumineuses (18a) qui peuvent être émises par le premier élément semiconducteur (24a), à partir d'impulsions lumineuses (18b) qui peuvent être émises par au moins un deuxième élément semiconducteur (24b) et peuvent être reçues par au moins un récepteur (20b).

5. Arrangement de détection selon l'une quelconque des revendications précédentes, **caractérisé en ce que** le dispositif d'essai de fonctionnement (34) comprend au moins un filtre passe-bande optique associé à au moins un récepteur (20b).

6. Arrangement de détection selon l'une quelconque des revendications précédentes, **caractérisé en ce que** le dispositif d'essai de fonctionnement (34) comporte des moyens (20b, 24b, 36) permettant de vérifier un degré de salissure sur le chemin optique de l'arrangement de détection (12).

7. Arrangement de détection selon l'une quelconque des revendications précédentes, **caractérisé en ce que** le dispositif d'essai de fonctionnement (34) comporte des moyens (20b, 24b, 36) permettant de vérifier une fréquence de démodulation et/ou une fréquence de verrouillage du premier élément semiconducteur (24a) sur la base de la fréquence des impulsions lumineuses (18b) qui peuvent être émises par au moins un deuxième élément semiconducteur (24b) et peuvent être reçues par au moins un récepteur (20b).

8. Arrangement de détection selon l'une quelconque des revendications précédentes, **caractérisé en ce que** le dispositif d'essai de fonctionnement (34) comporte des moyens (42) permettant de déterminer une position de déviation d'un dispositif de déviation de lumière (32).

9. Procédé pour faire fonctionner un arrangement de détection (12) destiné à détecter des objets (14), dans lequel des impulsions lumineuses (18a, 18b) sont émises par un dispositif d'émission (16), les impulsions lumineuses (18a, 18b) sont reçues directement ou indirectement par au moins un récepteur (20a, 20b), et les impulsions lumineuses reçues (18a, 18b) sont interprétées par au moins un dispositif de commande et d'interprétation (22), **caractérisé en ce qu'**une impulsion de tension d'émission électrique est appliquée dans la direction de passage à un premier élément semiconducteur électroluminescent (24a) réalisé sous forme de diode et une impulsion lumineuse correspondante (18a) est émise par le premier élément semiconducteur (24a), au moment de la coupure du premier élément semiconducteur (24a) au moyen d'inductances électriques du dispositif d'émission (16), au moins une impulsion de tension d'induction est générée, laquelle est dirigée à l'opposé de l'impulsion de tension d'émission, et l'impulsion de tension d'induction est appliquée à au moins un deuxième élément semiconducteur électroluminescent (24b) réalisé sous forme de diode, lequel est connecté en antiparallèle par rapport au premier élément semiconducteur (24a), de sorte qu'une impulsion lumineuse (18b) est émise par ledit au moins un deuxième élément semiconducteur (24b) en raison de l'impulsion de tension d'induction et est reçue directement ou indirectement par au moins un récepteur (20b), et la capacité fonctionnelle d'au moins certaines parties de l'arrangement de détection (12) est déduite de l'impulsion lumineuse reçue (18b) au moyen d'un dispositif d'essai de fonctionnement (34).

10. Procédé selon la revendication 9, **caractérisé en ce qu'**une quantité de lumière et/ou une évolution temporelle de la lumière des impulsions lumineuses (18b) émises par ledit deuxième élément semiconducteur (24b) sont déterminés, et **en ce qu'**une puissance d'émission du premier élément semiconducteur (24a) est déterminée à partir de celles-ci.

11. Procédé selon la revendication 9 ou 10, **caractérisé en ce que** la capacité fonctionnelle d'au moins un dispositif de déviation de lumière (32) de l'arrangement de détection (12) est vérifiée en dirigeant au moins un deuxième élément semiconducteur (24b) vers le dispositif de déviation de lumière (32) de sorte que les impulsions lumineuses (18b) émises par ledit deuxième élément semiconducteur (24b) sont déviées vers au moins un récepteur (20b), et que la capacité fonctionnelle du dispositif de déviation de lumière (32) est déduite des impulsions lumineuses réfléchies (18b) reçues par ledit au moins un récepteur (20b).

12. Procédé selon l'une quelconque des revendications 9 à 11, **caractérisé en ce qu'**une température du premier élément semiconducteur (24a) et/ou une longueur d'onde des impulsions lumineuses (18a) émises par le premier élément semiconducteur (24a) sont déterminées à partir des impulsions lumineuses (18b) émises par au moins un élément semiconducteur (24b) et reçues par au moins un récepteur (20b).

13. Procédé selon l'une quelconque des revendications 9 à 12, **caractérisé en ce qu'**un degré de salissure sur le chemin optique de l'arrangement de détection (12) est surveillé à l'aide d'impulsions lumineuses (18b) émises par ledit au moins un deuxième élément semiconducteur (24b) et reçues par au moins un récepteur (20b).

14. Procédé selon l'une quelconque des revendications 9 à 13, **caractérisé en ce qu'**une fréquence de démodulation et/ou une fréquence de verrouillage du premier élément semiconducteur (24a) sont vérifiées sur la base de la fréquence d'impulsions lumineuses (18b) émises par ledit au moins un deuxième élément semiconducteur (24b) et reçues par au moins un récepteur (20b).
